(19) Europäisches Patentamt
European Patent Office
Office européen des brevets

(11) EP 4 574 683 A1

(12) EUROPÄISCHE PATENTANMELDUNG

(43) Veröffentlichungstag:
25.06.2025 Patentblatt 2025/26

(51) Internationale Patentklassifikation (IPC):
B64G 1/24 (2006.01)

(21) Anmeldenummer: 24203930.3

(22) Anmeldetag: 01.10.2024

(52) Gemeinsame Patentklassifikation (CPC):
B64G 1/24; B64G 1/242; B64G 1/409

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH MA MD TN

(30) Priorität: 21.12.2023 DE 102023136423

(71) Anmelder: Deutsches Zentrum für Luft- und Raumfahrt e.V.
53227 Bonn (DE)

(72) Erfinder:
• Lutze, Jean-Pascal
53227 Bonn (DE)
• Schuller, Robert
53227 Bonn (DE)
• Mishra, Hrishik
53227 Bonn (DE)

(74) Vertreter: Schlimme, Wolfram
WSPatent
Haidgraben 2
85521 Ottobrunn (DE)

(54) **IN EINEM RAUM FREISCHWEBEND STABILISIERBARES OBJEKT UND VERFAHREN ZUR LAGEREGELUNG EINES OBJEKTS IN DER SCHWERELOSIGKEIT ODER IM FREIEN FALL**

(57) Ein in einem Raum freischwebend stabilisierbares Objekt, insbesondere Weltraumobjekt, mit einer objektseitigen, ersten Lageregelungseinrichtung ($L_1$) zur Lageregelung des einen Objektschwerpunkt ($S_o$) aufweisenden Objekts (1, 1', 1") in der Schwerelosigkeit oder im freien Fall, wobei das Objekt (1, 1', 1") mit einer eigenständig im Raum bewegbaren externen Objekterweiterungseinrichtung (2) gekoppelt ist, zeichnet sich dadurch aus, dass die externe Objekterweiterungseinrichtung (2) mit einer relativ zum Objekt (1, 1', 1") bewegbaren zweiten Lageregelungseinrichtung ($L_2$) versehen ist.

Fig. 1

EP 4 574 683 A1

**Beschreibung**

TECHNISCHES GEBIET

Die Erfindung betrifft ein in einem Raum freischwebend stabilisierbares Objekt, insbesondere ein Weltraumobjekt, nach dem Oberbegriff des Patentanspruchs 1. Sie betrifft weiterhin ein Verfahren zur Lageregelung eines einen Objektschwerpunkt aufweisenden Objects in der Schwerelosigkeit oder im freien Fall gemäß Anspruch 13.

Die Erfindung befasst sich somit mit einem in einem Raum, beispielsweise im Weltraum oder unter Gravitationseinfluss im freien Fall freischwebend stabilisierbarem Objekt, das mit einer eigenständig im Raum bewegbaren externen Objekterweiterungseinrichtung (2) gekoppelt ist. Ein solches Objekt kann beispielsweise eine Weltraumstation sein, an die außen ein Roboterarm als Objekterweiterungseinrichtung angekoppelt ist. Auch kann ein solches Objekt beispielsweise ein zu wartender oder zu reparierender Satellit sein, an den ein Roboter-Satellit als Service-Satellit angekoppelt ist. Weiterhin befasst sich die Erfindung mit einem Verfahren zur Orientierungsregelung von Objekten in der Schwerelosigkeit (zum Beispiel im Weltall) oder im freien Fall in einem Gravitationsfeld durch ein Lageregelungssystem (Attitude Determination and Control System) und den mechanischen Aufbau einer zur Durchführung dieses Verfahrens geeigneten Vorrichtung mit einer erweiterten Reaktionsradanordnung, einer so genannten Extended Reaction Wheel Assembly (ERW). Dabei geht es insbesondere um den Einsatz von Reaktionsrädern, so genannten Reaction Wheels (RW), und "gefesselten Kreiseln", so genannten Control Moment Gyroscopes (CMGs) und deren Desaturierung nach durchgeführter Orientierungsänderung des Objekts.

HINTERGRUND DER ERFINDUNG

Lageregelungssysteme werden auf unterschiedliche Art und Weise technisch umgesetzt. Hierbei können Reaktionsräder, aktive Momentum Gyroskope oder Triebwerke verwendet werden. Bei der technischen Umsetzung durch Reaktionsräder wird üblicherweise zumindest ein Reaktionsrad für eine Raumachse verwendet, um deren Orientierung zu regeln. Die Reaktionsräder sind starr mit dem Objekt verbunden und bilden Vorrichtungen zum Austausch von Drehimpuls, die zur Orientierungssteuerung von Weltraumobjekten verwendet werden und die üblicherweise aktuierte, also antriebsbetätigte, rotierende Scheiben aufweisen.

Ein Objekt im Sinne der vorliegenden Anmeldung kann zum Beispiel ein Satellit, ein Raumfahrzeug, eine Weltraumstation, oder auch ein nicht technologisches Weltraumobjekt sein, wie beispielsweise eine Rakete oder Raketenstufe, ein Weltraumschrottobjekt, oder es kann sogar ein Asteroid sein. Die Erfindung ist jedoch nicht auf die vorstehenden Weltraumobjekte beschränkt, sondern sie kann auch bei "irdischen" Flugobjekten angewendet werden, wenn diese sich beispielsweise im freien Fall in einem Gravitationsfeld eines Himmelskörpers befinden.

Die Rotationsgeschwindigkeit von derartigen Reaktionsrädern ist proportional zu der Orientierung des Objektes um die Rotationsachse eines betreffenden Rotationsrades. Die maximale Rotationsgeschwindigkeit und Rotationsbeschleunigung eines Rotationsrades unterliegen allerdings technischen und physikalischen Beschränkungen, beispielsweise bedingt durch Belastungsgrenzen der Rotationslager und der Fliehkraftresistenz des Rotationsrades sowie der Motorleistung eines Antriebs für das Rotationsrad. Dementsprechend unterliegt auch die Orientierungsänderung des Objektes entsprechenden Limitierungen. Änderungen oder Korrekturen der Orientierung eines solchen Objekts können also nur in begrenztem Maße durchgeführt werden, nämlich so häufig und so intensiv bis das Rotationsrad seine maximale Rotationsgeschwindigkeit erreicht hat. Eine Änderung der Rotationsgeschwindigkeit eines Reaktionsrades für eine Raumachse, beispielsweise um die Rotationsgeschwindigkeit des Rotationsrades wieder zu reduzieren, geht mit einer üblicherweise unerwünschten Orientierungsänderung des Objektes einher und muss daher durch ein anderes Lageregelungssystem ausgeglichen werden, wie zum Beispiel durch Lageregelungs-Triebwerke. Der große Nachteil von Triebwerken ist allerdings das begrenze Treibstoffangebot auf dem Objekt und somit die begrenzte Nutzungsdauer eines Triebwerks-Lageregelungssystems.

DARSTELLUNG DER ERFINDUNG

Aufgabe der vorliegenden Erfindung ist es, ein in einem Raum freischwebend stabilisierbares Objekt, das mit einer eigenständig im Raum bewegbaren externen Objekterweiterungseinrichtung gekoppelt ist, mit verbesserten Lageregelungseigenschaften sowie ein verbessertes Verfahren zur Lageregelung einer solchen Einheit aus Objekt und Objekterweiterungseinrichtung anzugeben, die unabhängig von Treibstoffvorräten auch über lange Zeit funktionieren.

Der auf das Objekt gerichtete Teil der Aufgabe wird durch die Merkmale des Patentanspruchs 1 gelöst.

Ein in einem Raum freischwebend stabilisierbares Objekt, insbesondere ein Weltraumobjekt, ist versehen mit einer objektseitigen, ersten Lageregelungseinrichtung zur Lageregelung des einen Objektschwerpunkt aufweisenden Objekts in der Schwerelosigkeit oder im freien Fall, wobei das Objekt mit einer eigenständig im Raum bewegbaren externen Objekterweiterungseinrichtung gekoppelt ist, die ihrerseits mit einer relativ zum Objekt bewegbaren zweiten Lageregelungseinrichtung versehen ist.

<u>VORTEILE</u>

Bewegungen von einer mit einem solchen Objekt gekoppelten Objekterweiterungseinrichtung, beispielsweise von einem an einem Satellit angebrachten Roboterarm, werden herkömmlich durch die objektseitige Lageregelungseinrichtung kompensiert, wodurch diese schnell an ihre Grenzen kommen kann. Die Erfinder haben erkannt, dass eine zusätzlich an der Objekterweiterungseinrichtung vorgesehene zweite Lageregelungseinrichtung nicht nur die objektseitige, erste Lageregelungseinrichtung entlasten kann, sondern im Zusammenwirken mit der ersten Lageregelungseinrichtung diese sogar hinsichtlich ihrer Lageregelungseigenschaften verbessern kann.

Weitere bevorzugte und vorteilhafte Ausgestaltungsmerkmale des erfindungsgemäßen Objekts sind Gegenstand der Unteransprüche 2 bis 12.

Vorteilhaft ist es, wenn die zweite Lageregelungseinrichtung zumindest eine mit dem Objekt gekoppelte erweiterte Reaktionsradanordnung aufweist, die ihrerseits einen Schwerpunkt aufweist. Eine solche Reaktionsradanordnung ist ein bewährtes Lageregelungsmittel.

Dabei ist es von Vorteil, wenn die erweiterte Reaktionsradanordnung mit zumindest einem mittels eines Rotationsantriebs um eine Rotationsachse drehbaren Reaktionsrad versehen ist.

Vorzugsweise ist dabei die Rotationsachse des Reaktionsrads mittels zumindest eines Aktuators relativ zum Objektschwerpunkt verlagerbar.

Bei einer bevorzugten Ausführungsform davon ist vorgesehen, dass der Rotationsantrieb und der zumindest eine Aktuator von einer Steuerungseinrichtung ansteuerbar sind.

Eine besonders bevorzugte Umsetzung der Erfindung zeichnet sich dadurch aus, dass das Objekt ein Weltraumgegenstand ist.

Bei einer weiteren besonders bevorzugten Ausführungsform weist die Objekterweiterungseinrichtung einen im Raum bewegbaren Roboterarm auf oder ist von einem solchen gebildet.

Vorteilhafterweise ist das zumindest eine Reaktionsrad über ein Hebelwerk am Objekt angebracht, wobei das Reaktionsrad mit dem Rotationsantrieb und das Hebelwerk mit dem zumindest einen Aktuator versehen ist, der ausgebildet ist, um zumindest einen Hebelarm des Hebelwerks mit einer Schwenkbewegung um eine zugeordnete Schwenkachse zu beaufschlagen, um so die Translationsbewegung des Schwerpunkts der Reaktionsradanordnung entlang der Kreisbahn um den Objektschwerpunkt auszuführen.

Vorzugsweise ist das Reaktionsrad am freien Ende eines Hebelarms des Hebelwerks um seine Rotationsradachse drehbar gelagert.

Auch vorteilhaft ist es, wenn das Hebelwerk zwei oder mehr Hebelarme aufweist, die jeweils mittels eines zugeordneten Aktuators um eine zugehörige Schwenkachse schwenkbar sind. Besonders vorteilhaft ist dabei ein zwei miteinander seriell gelenkig gekoppelte Hebelarme aufweisendes Hebelwerk, dessen Gelenke jeweils einen Aktuator aufweisen und dessen Schwenkachsen parallel zueinander verlaufen. Die dabei vom betreffenden Aktuator im betreffenden Hebelgelenk bewirkte Schwenkbewegung ist vorteilhaft so von der Steuerungseinrichtung gesteuert, dass der Schwerpunkt der erweiterten Reaktionsradanordnung im ersten und im dritten Schritt eine lineare Translationsbewegung vom Objektschwerpunkt weg beziehungsweise zum Objektschwerpunkt hin vollführt.

Vorzugsweise verlaufen dabei die Schwenkachsen der Hebelarme parallel zueinander und parallel zur Rotationsachse des Reaktionsrades.

Bevorzugter Weise sind bei einem Objekt drei Reaktionsradanordnungen vorgesehen, wobei die Schwenk- und Rotationsachsen einer ersten Rotationsradanordnung orthogonal zu den Schwenk- und Rotationsachsen einer zweiten Rotationsradanordnung verlaufen, wobei die Schwenk- und Rotationsachsen der zweiten Rotationsradanordnung orthogonal zu den Schwenk- und Rotationsachsen einer dritten Rotationsradanordnung verlaufen und wobei die Schwenk- und Rotationsachsen der dritten Rotationsradanordnung orthogonal zu den Schwenk- und Rotationsachsen der ersten Rotationsradanordnung verlaufen.

Der auf das Verfahren gerichtete Teil der Aufgabe wird durch die Merkmale des Patentanspruchs 13 gelöst.

Bei einem solchen Verfahren zur Lageregelung eines vorgenannten, einen Objektschwerpunkt aufweisenden Objekts in der Schwerelosigkeit oder im freien Fall wobei das Objekt ein erstes, objektseitiges Lageregelungssystem aufweist und mit einer bereichsweise relativ zum Objekt bewegbaren externen Objekterweiterungseinrichtung gekoppelt ist, die ein zweites Lageregelungssystem aufweist, das zumindest eine erweiterte Reaktionsradanordnung aufweist, die ihrerseits einen Schwerpunkt aufweist und die mit zumindest einem mittels eines Rotationsantriebs um eine Rotationsachse drehbaren Reaktionsrad versehen ist, wobei die Rotationsachse mittels zumindest eines Aktuators relativ zum Objektschwerpunkt verlagerbar ist, wobei der Rotationsantrieb und der zumindest eine Aktuator von einer Steuerungseinrichtung ansteuerbar sind, zeichnet sich aus durch die Schritte:

- Ermitteln einer einer vorgegebenen Bewegung der erweiterten Reaktionsradanordnung zugeordneten Bewegungsbahnkurve für den Schwerpunkt der erweiterten Reaktionsradanordnung,
- Bewegen der erweiterten Reaktionsradanordnung mittels des zumindest einen Aktuators entlang der vorab ermittelten Bewegungsbahnkurve derart, dass sich der Schwerpunkt der erweiterten Reaktionsradanordnung auf einer Bahn, insbesondere einer Kreisbahn, um den Objektschwerpunkt bewegt, wobei gleichzeitig der Rotationsantrieb die Rotationsgeschwindigkeit des Reaktionsrades derart ändert, dass die vektorielle Summe des Drehimpulses des um die Reaktionsradachse rotierenden Reaktionsrades und des Drehimpulses der sich um die Objektschwerpunktachse entlang der Bahn bewegenden erweiterten Reaktionsradanordnung konstant ist.

Durch diese erfindungsgemäße Vorgehensweise kann die Rotationsgeschwindigkeit eines betreffenden Reaktionsrades beispielsweise desaturiert, also auf Null gebracht, werden, ohne eine Orientierungsänderung des Objektes zu induzieren.

Weitere bevorzugte und vorteilhafte Ausgestaltungsmerkmale des erfindungsgemäßen Verfahrens sind Gegenstand der Unteransprüche 14 bis 16.

Bei einer besonders vorteilhaften Ausführung des erfinderischen Verfahrens ist vorgesehen,

- dass in einem ersten Schritt der zumindest eine Aktuator den Abstand des Reaktionsrades vom Objektschwerpunkt vergrößert, wobei sich der Schwerpunkt der erweiterten Reaktionsradanordnung in einer ersten Translationsbewegung entlang einer vom Objektschwerpunkt ausgehenden Geraden vom Objektschwerpunkt weg bewegt und wobei sich die Rotationsgeschwindigkeit des Reaktionsrades nicht ändert,
- dass in einem zweiten Schritt der zumindest eine Aktuator die erweiterte Reaktionsradanordnung derart bewegt, dass sich der Schwerpunkt der erweiterten Reaktionsradanordnung auf der Bahn um den Objektschwerpunkt bewegt, wobei gleichzeitig der Rotationsantrieb die Rotationsgeschwindigkeit des Reaktionsrades derart ändert, dass die vektorielle Summe des Drehimpulses des um die Reaktionsradachse rotierenden Reaktionsrades und des Drehimpulses der sich um die Objektschwerpunktachse entlang der Bahn bewegenden erweiterten Reaktionsradanordnung konstant ist, und
- dass in einem dritten Schritt der zumindest eine Aktuator den Abstand des Reaktionsrades vom Objektschwerpunkt verringert, wobei sich der Schwerpunkt der erweiterten Reaktionsradanordnung in einer zweiten Translationsbewegung entlang einer weiteren vom Objektschwerpunkt ausgehenden Geraden zum Objektschwerpunkt hin bewegt und wobei sich die im zweiten Schritt geänderte Rotationsgeschwindigkeit des Reaktionsrades nicht weiter ändert.

Die aktuatorgesteuerte Bewegung des Schwerpunkts der erweiterten Reaktionsradanordnung auf einer radial äußeren Bahn, insbesondere einer Kreisbahn, um den Objektschwerpunkt gemäß dem zweiten Schritt induziert ihrerseits zwar prinzipiell einen Drehimpuls auf das Objekt, allerdings wird dieser durch das synchrone Abbremsen der Rotationsgeschwindigkeit des Reaktionsrades kompensiert.

Hat die Rotationsgeschwindigkeit des Reaktionsrades die vorgegebene Zielgröße, beispielsweise Null, erreicht, wird die Bewegung des Reaktionsrades auf der Bahn um den Objektschwerpunkt gestoppt. Im dritten Schritt wird dann das Reaktionsrad wieder translatorisch auf den Objektschwerpunkt zu bewegt, um beispielsweise den ursprünglichen Radialabstand wieder herzustellen. Während der drei Schritte des erfindungsgemäßen Verfahrens wird also die Rotationsgeschwindigkeit des Reaktionsrades geändert, beispielsweise reduziert, ohne dass dadurch ein Drehimpuls auf das Objekt induziert wird; das Objekt behält folglich seine Lage im Raum unverändert bei.

Vorzugsweise bildet die geänderte Rotationsgeschwindigkeit des Reaktionsrades eine Zielgröße, nach der in der Steuerungseinrichtung die Translationsbewegung des Schwerpunkts der erweiterten Reaktionsradanordnung entlang der Bahn, insbesondere der Kreisbahn, um den Objektschwerpunkt bestimmt werden. Ein in der Steuerungseinrichtung vorgesehener oder dieser zugeordneter Computer berechnet folglich ausgehend von der Zielgröße der angestrebten Rotationsgeschwindigkeit die erforderliche Trajektorie des Reaktionsrades bei der Durchführung der Schritte eins bis drei und die Geschwindigkeit der radialen Bewegungen und der Bewegung des Schwerpunkts der erweiterten Reaktionsradanordnung entlang der Kreisbahn und liefert entsprechende Steuerungssignale für die Aktuatoren und den Rotationsantrieb.

Von besonderem Vorteil ist es, wenn die geänderte Rotationsgeschwindigkeit des Reaktionsrades, also die Zielgröße der Rotationsgeschwindigkeit des Reaktionsrades, gleich Null ist. Hierdurch kann die vollständige Bandbreite der Lageregelungsfähigkeit der Reaktionsradanordnung wieder hergestellt werden.

Die Zielgröße kann aber auch einen beliebigen positiven oder negativen Wert annehmen, wenn beispielsweise ein extern auf das Objekt ausgeübter Impuls erwartet wird, beispielsweise beim Andocken eines Raumfahrzeugs an eine Raumstation, um eine dauerhafte Orientierungsveränderung des Objekts (zum Beispiel der Weltraumstation) nach dem Andockmanöver zu verhindern. Im Idealfall kann das erfindungsgemäße Verfahren sogar während des Andockmanövers synchron mit diesem durchgeführt werden, um jegliche Lageänderung des Objekts beim Andocken zu minimieren oder gar zu vermeiden.

Der das Verfahren betreffende Kern der Erfindung besteht somit in einem Verfahren zur Lageregelung eines einen Objektschwerpunkt aufweisenden Objekts in der Schwerelosigkeit oder im freien Fall mittels zumindest einer mit dem Objekt gekoppelten erweiterten Reaktionsradanordnung und zeichnet sich dadurch aus, dass in einem ersten Schritt der zumindest eine Aktuator den Abstand des Schwerpunkts der erweiterten Reaktionsradanordnung in einer ersten Translationsbewegung entlang einer vom Objektschwerpunkt ausgehenden Geraden vom Objektschwerpunkt weg bewegt, wobei sich die Rotationsgeschwindigkeit des Reaktionsrades nicht ändert; dass in einem zweiten Schritt der zumindest eine Aktuator den Schwerpunkt der erweiterten Reaktionsradanordnung auf einer Kreisbahn um den Objektschwerpunkt bewegt, wobei gleichzeitig der Rotationsantrieb die Rotationsgeschwindigkeit des Reaktionsrades derart ändert, dass die vektorielle Summe des Drehimpulses des um die Reaktionsradachse rotierenden Reaktionsrades und des Drehimpulses der sich um die Objektschwerpunktachse entlang der Kreisbahn bewegenden erweiterten Reaktionsradanordnung konstant ist, und dass in einem dritten Schritt der zumindest eine Aktuator den Schwerpunkt der erweiterten Reaktionsradanordnung in einer zweiten Translationsbewegung entlang einer weiteren vom Objektschwerpunkt ausgehenden Geraden zum Objektschwerpunkt hin bewegt, wobei sich die im zweiten Schritt geänderte Rotationsgeschwindigkeit des Reaktionsrades nicht weiter ändert. Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

KURZE BESCHREIBUNG DER ZEICHNUNGEN

Es zeigt:

Fig. 1 ein schematisches Schaubild einer erfindungsgemäßen Vorrichtung;

Fig. 2 eine schematische Darstellung des erfindungsgemäßen Verfahrensablaufs;

Fig. 3A eine Satellitenanordnung ohne eine erfindungsgemäße Vorrichtung;

Fig. 3B die Satellitenanordnung aus Fig. 3A mit einer erfindungsgemäßen Vorrichtung und

Fig. 4 eine Anwendung der erfindungsgemäßen Vorrichtung aus Fig. 1 an einer Weltraumstation bei einem Docking-Manöver.;

DARSTELLUNG VON BEVORZUGTEN AUSFÜHRUNGSBEISPIELEN

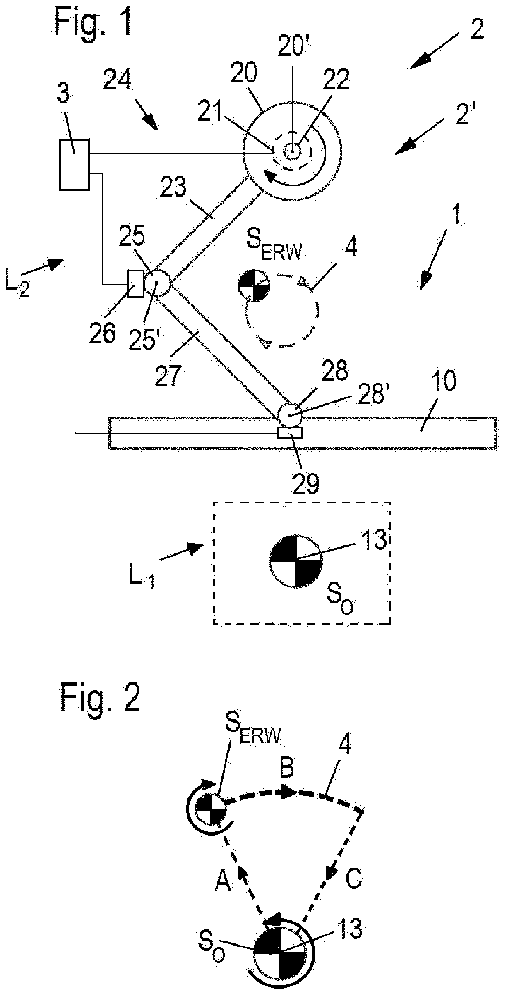

Fig. 1 zeigt ein schematisches Schaubild einer erfindungsgemäßen Vorrichtung zur Lageregelung eines von einem Satelliten 1 gebildeten Objekts im Weltraum oder auf einem Orbit unter Schwerelosigkeitseinfluss. An einer hier nur schematisch dargestellten Struktur 10 des Satelliten 1 ist eine Reaktionsradanordnung 2' angebracht, die ein Reaktionsrad 20 und ein Hebelwerk 24 aufweist.

Das Reaktionsrad 20 der Reaktionsradanordnung 2' ist mittels eines Rotationsantriebs 21 um eine Rotationsradachse 20' rotierbar und ist dazu mittels eines Rotationslagers 22 an einem ersten Hebelarm 23 des Hebelwerks 24 drehbar gelagert. Der erste Hebelarm 23 ist mittels eines ersten Schwenklagers 25 um eine erste Schwenkachse 25' schwenkbar an einem zweiten Hebelarm 27 des Hebelwerks 24 gelagert. Ein erster Aktuator 26 ist im Bereich des ersten Schwenklagers 25 vorgesehen und ausgebildet, um den ersten Hebelarm 23 relativ zum zweiten Hebelarm 27 zu verschwenken. Der zweite Hebelarm 27 ist mittels eines zweiten Schwenklagers 28 um eine zweite Schwenkachse 28' schwenkbar an der Struktur 10 des Satelliten gelagert. Ein zweiter Aktuator 29 ist im Bereich des zweiten Schwenklagers 28 vorgesehen und ausgebildet, um den zweiten Hebelarm 27 relativ zur Struktur 10 des Satelliten 1 zu verschwenken. Der Rotationsantrieb 21, der erste Aktuator 26 und der zweite Aktuator 29 werden von einer Steuerungseinrichtung 3 mit Steuersignalen beaufschlagt, wie es in Fig. 1 symbolisch durch dünne Linien gezeigt ist, um das erfindungsgemäße Verfahren durchzuführen.

Ebenfalls in Fig. 1 schematisch gezeigt sind der als Objektschwerpunkt So bezeichnete Masseschwerpunkt des Satelliten 1 mit seiner Objektschwerpunktachse 13 und der als Schwerpunkt $S_{ERW}$ bezeichnete Masseschwerpunkt der Reaktionsradanordnung 2' sowie eine Kreisbahn 4, auf der sich der Schwerpunkt $S_{ERW}$ der Reaktionsradanordnung 2' gemäß dem Verfahren der Erfindung bewegt, wie es nachstehend anhand der Fig. 2 noch dargelegt wird.

Die erste Schwenkachse 25', die zweite Schwenkachse 28' und die Rotationsradachse 20' verlaufen parallel zueinander und zur Objektschwerpunktachse 13 und erstrecken sich in Fig 1 senkrecht zur Zeichenebene. Folglich erfolgt eine Schwenkbewegung der Hebelarme 23 und 27 des Hebelwerks 24 in einer Ebene, nämlich in der Zeichenebene der Fig. 1.

In Fig. 2 ist schematisch das Bewegungsprofil wiedergegeben, das der Schwerpunkt $S_{ERW}$ der Reaktionsradanordnung 2' durchfährt, wenn das Verfahren der Erfindung durchgeführt wird. In einem ersten Schritt werden der erste Aktuator 26 und der zweite Aktuator 29 derart synchron betätigt, dass der erste Hebelarm 23 und der zweite Hebelarm 27 so verschwenkt werden, dass sich der Schwerpunkt $S_{ERW}$ der erweiterten Reaktionsradanordnung 2' in einer ersten Translationsbewegung entlang einer vom Objektschwerpunkt So ausgehenden Geraden A vom Objektschwerpunkt So weg bewegt, wodurch sich der Abstand des Schwerpunkts $S_{ERW}$ vom Objektschwerpunkt So vergrößert, wobei sich die Rotationsgeschwindigkeit des Reaktionsrades 20 nicht ändert und sich folglich die Drehimpulse um den Schwerpunkt $S_{ERW}$ der erweiterten Reaktionsradanordnung 2' und um den Objektschwerpunkt So gegenseitig kompensieren, also kein Drehimpuls in das vom Satelliten 1 gebildete Objekt induziert wird.

In einem zweiten Verfahrensschritt werden die beiden Aktuatoren 26, 29 von der Steuerungseinrichtung 3 derart mit Signalen beaufschlagt, dass sie die Reaktionsradanordnung 2' derart bewegen, dass sich der Schwerpunkt $S_{ERW}$ der erweiterten Reaktionsradanordnung 2' entlang einer gekrümmten Trajektorie B auf einer Kreisbahn 4 um die Objektschwerpunktachse 13 des Objektschwerpunkts So bewegt. Dabei wird gleichzeitig der Rotationsantrieb 21 von der Steuerungseinrichtung 3 derart mit Signalen beaufschlagt, dass die Rotationsgeschwindigkeit des Reaktionsrades 20 allmählich reduziert wird. Dabei bleibt die Summe des Drehimpulses des um die Rotationsradachse 20' rotierenden Reaktionsrades 20 und des Drehimpulses der sich um die Objektschwerpunktachse entlang der Kreisbahn 4 bewegenden erweiterten Reaktionsradanordnung 2' konstant. Bei der Bewegung entlang der gekrümmten Trajektorie B wird somit durch entsprechende Beaufschlagung des Reaktionsradantriebs 21 die Drehzahl des Reaktionsrades 20 - vorzugsweise bis auf Null - reduziert, ohne dass ein zusätzlicher Drehimpuls auf das Objekt 1 induziert wird; das Objekt 1 behält also seine Orientierung im Raum bei.

In einem dritten Schritt werden die Aktuatoren 26, 29 von der Steuerungseinrichtung 3 derart angesteuert, dass sich der Abstand des Reaktionsrades 20 vom Objektschwerpunkt So so verringert, dass sich der Schwerpunkt $S_{ERW}$ der erweiterten Reaktionsradanordnung 2' in einer zweiten Translationsbewegung entlang einer weiteren vom Objektschwerpunkt So ausgehenden Geraden C zum Objektschwerpunkt So hin bewegt. Dabei ändert sich die reduzierte Rotationsgeschwindigkeit des Reaktionsrades 2' nicht, so dass dessen Drehimpuls konstant bleibt und sich die Orientierung des Objekts 1 im Raum nicht ändert. Im Einzelnen steht

- die Trajektorie A für eine Bewegung des Schwerpunktes $S_{ERW}$ der erweiterten Reaktionsradanordnung 2' auf einer Linie, welche die Schwerpunkte der Reaktionsradanordnung 2' und des Objektes 1 miteinander verbindet, weg von dem Schwerpunkt So des Objekts 1. Während dieser ersten Phase werden die Rotationsgeschwindigkeit des Reaktionsrades und die Orientierung des Objektes nicht verändert;
- die Trajektorie B für eine Bewegung des Schwerpunktes $S_{ERW}$ der erweiterten Reaktionsradanordnung 2' auf einer Kreisbahn, der Trajektorie B. Dabei ist die Bewegungsrichtung immer orthogonal zu der Linie, die die Schwerpunkte $S_O$ und $S_{ERW}$ miteinander verbindet. Bei gleichbleibender Rotationsgeschwindigkeit des Reaktionsrades würde durch diese Kreisbahnbewegung eine Orientierungsänderung des Objektes 1 eintreten. Dies jedoch wird durch das erfindungsgemäße Verfahren verhindert,
- die Trajektorie C für eine Bewegung des Schwerpunktes $S_{ERW}$ der erweiterten Reaktionsradanordnung 2' auf einer Linie, welche die Schwerpunkte der Reaktionsradanordnung 2' und des Objektes 1 miteinander verbindet, hin zum Schwerpunkt $S_O$ des Objekts 1. Während dieser dritten Phase werden die Rotationsgeschwindigkeit des Reaktionsrades und die Orientierung des Objektes nicht verändert.

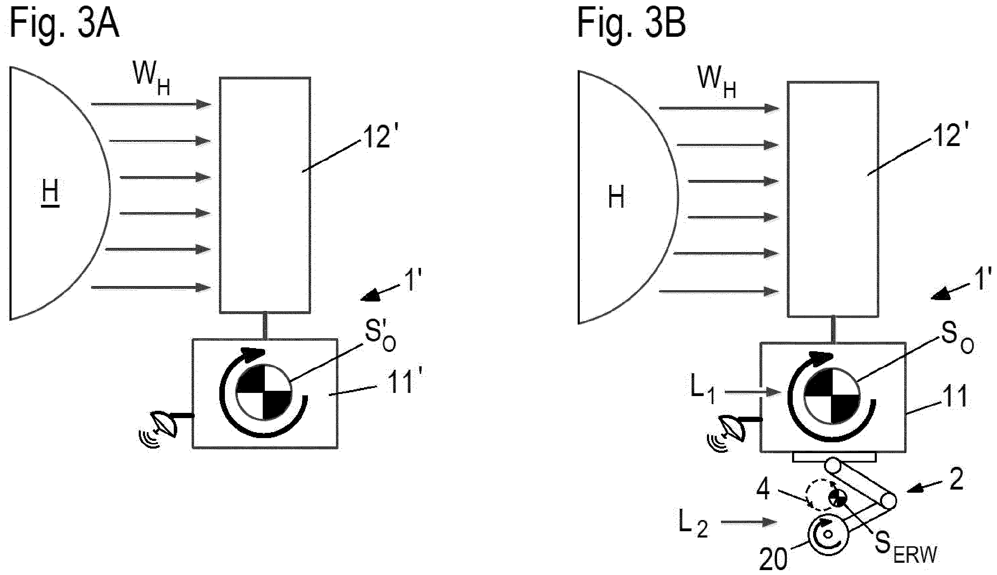

Fig. 3A und 3B zeigen einen Anwendungsfall zur Desaturierung des Reaktionsrades bei gleichbleibender Orientierung des Objektes während der Ausführung der erfindungsgemäß optimierten Trajektorie. Unter "Desaturierung" wird das Bringen der Rotationsgeschwindigkeit des Reaktionsrades 20 auf Null verstanden.

Fig. 3A zeigt eine herkömmlich aufgebaute Satellitenanordnung 1' mit einem Satellitenkörper 11' und einem davon ausgefahrenen Solarpanel 12', das von der Sonne H angestrahlt wird. Der Strahlungsdruck der von Sonne H ausgehenden Solarstrahlung $W_H$ bewirkt, dass sich die Satellitenanordnung 1' allmählich um ihren Schwerpunkt So aus ihrer Soll-Orientierung wegdreht.

In der in Fig. 3B dargestellten Abwandlung ist der Satellit mit einer erfindungsgemäßen Reaktionsradanordnung 2' ausgestattet. Das Reaktionsrad 20 wird dafür benötigt, die, durch den Strahlungsdruck der Sonne hervorgerufene Orientierungsstörung zu kompensieren. Hierbei muss kontinuierlich die Rotationsgeschwindigkeit des Reaktionsrades 20 in eine Richtung verändert werden. Dies führt zwangsläufig irgendwann zum Erreichen der technischen Limits der Reaktionsradanordnung 2' (maximale Rotationsgeschwindigkeit). Diesem Problem des Erreichens der Limits wird durch das erfindungsgemäße Verfahren entgegengewirkt, da das Reaktionsrad von Zeit zu Zeit desaturiert werden kann.

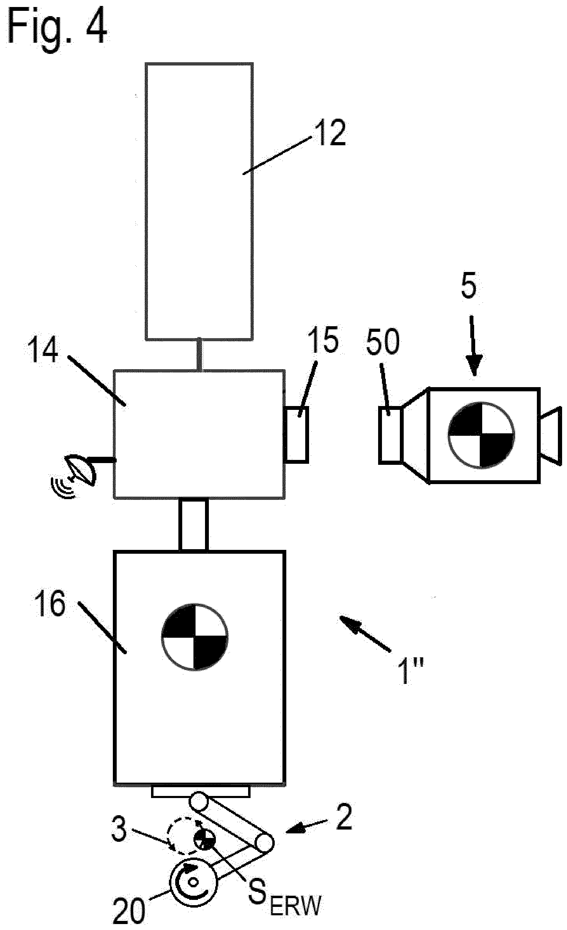

Fig. 4 zeigt einen anderen Anwendungsfall des erfindungsgemäßen Verfahrens und der erfindungsgemäßen Vorrichtung, nämlich eine gezielte Erhöhung der Rotationsgeschwindigkeit des Reaktionsrades 20 zur Vorhaltung für geplante Ereignisse. Eine Raumstation 1" mit einem Solarpanel 12, einem mit einem Dockingport 15 versehenen Dockingmodul 14 und einem Aufenthaltsmodul 16 ist mit der erfindungsgemäßen Reaktionsradanordnung 2' ausgestattet. Ein Raumtransporter 5 bewegt sich auf die Raumstation zu

Die Rotationsgeschwindigkeit der Raumstation 1" ist zu Beginn Null. Eine Andockung des Raumtransporters 5 am Dockingport 15 erfolgt mittels eines Docking-Interfaces 50. Im Augenblick des Andockens würde, basierend auf dem Impulserhaltungssatz, eine Rotationsgeschwindigkeit um den Gesamtschwerpunkt So auf die Raumstation 1" induziert werden.

Im herkömmlichen Fall des Standes der Technik würde diese induzierte Rotationsgeschwindigkeit durch Rotationsräder kompensiert, welche mit einer Rotationsgeschwindigkeit der Rotationsräder starten, die von vorherigen Manövern abhängt. Hat ein Rotationsrad seine maximale Drehzahl erreicht, kann es nicht mehr zur Kompensation des induzierten Drehimpulses beitragen und die Kompensation muss durch Lageregelungs-Triebwerke erfolgen.

Durch den erfindungsgemäßen mechanischen Aufbau der Reaktionsradanordnung 2' lässt sich die Rotationsgeschwindigkeit des Reaktionsrades unabhängig von der Orientierung des Objektes, also der Weltraumstation 1", ändern. Dementsprechend lässt sich die Rotationsgeschwindigkeit des betreffenden Reaktionsrades vor dem Andocken in die entgegengesetzte Drehrichtung, zu der Drehrichtung die nach dem Andocken benötigt wird, einstellen, um die Weltraumstation 1" zu stabilisieren. Durch diese entgegengesetzte initiale Drehrichtung, kann das betreffende Reaktionsrad für einen längeren Zeitraum Drehmoment in die gewünschte Richtung erzeugen, als zum Beispiel ein Reaktionsrad welches initial eine Rotationsgeschwindigkeit von Null hat. Dies hat den Vorteil, dass entweder das Objekt, also die Raumstation, schneller stabilisiert werden kann, oder dass die verwendeten Reaktionsräder kleiner dimensioniert werden können.

Der mechanische Aufbau der erfindungsgemäßen Vorrichtung weist somit eine Verkettung von zumindest einem Aktuator 26, 29 und zumindest einem Reaktionsrad 20 auf, wobei das Reaktionsrad 20 entweder am Ende einer seriellen Verkettung oder dezentral auf oder an dem Objekt 1 angebracht sein kann.

Das erfindungsgemäße Verfahren wird von einer Steuerungseinrichtung 3 mit einem Computer gesteuert, auf dem beispielsweise ein Programm mit einem Algorithmus zur koordinierten Ansteuerung der Aktuatoren 26, 29 und des Reaktionsrades 20 mit dem Ziel abläuft, eine gewünschte Endrotationsgeschwindigkeit des Reaktionsrades 20 zu erzielen. Dabei ist zu beachten, dass die Ansteuerung der Aktuatoren 26, 29 auf eine Art und Weise erfolgt, welche die Gesamtorientierung des Objektes 1 durch Beachtung des Drehimpulserhaltes nur in einer gewünschten Art und Weise verändert.

Es können dazu Trajektorien gefunden werden, welche eine unabhängige Veränderung der Reaktionsradgeschwindigkeit und der Objektrotationsgeschwindigkeit zulassen. Dabei wird das Prinzip der Impulserhaltung ausgenutzt.

Der Geschwindigkeitsvektor der gesamten Einheit, also des mit der erweiterten Reaktionsradanordnung 2' versehenen Objekts 1, bestimmt sich nach der folgenden Formel:

$$V = [V_s^T, \ V_a^T, \ V_r^T]^T \qquad (1)$$

mit dem Vektor der Geschwindigkeit des Objekts 1, also zum Beispiel des Raumfahrzeugs, im Raum (spatial velocity):

$$V_s \in R^6$$

mit dem Vektor der Geschwindigkeit (spacial velocity) der gesamten Einheit im Punkt des Massenschwerpunkts $S_{ERW}$ der erweiterten Reaktionsradanordnung 2' im Raum:

$$V_a \in R^6$$

und mit dem resultierenden Vektor der Geschwindigkeiten aller angetriebener Reaktionsräder 20 im Raum:

$$V_r \in R^6$$

Die Bewegungsgleichung lautet:

$$M\dot{V} + CV = F \qquad (2)$$

$$F = [F_s^T, \ F_a^T, \ F_r^T]^T \qquad\qquad (3)$$

mit den auf das Raumfahrzeug wirkenden Kräften $F_s$ im Masseschwerpunkt So des Objekts 1, also im Beispiel des Raumfahrzeugs, $F_a$ im

Massenschwerpunkt $S_{ERW}$ des angetriebenen Mechanismus' der erweiterten Reaktionsradanordnung 2' und der resultierenden Kraft $F_r$ der angetriebenen Reaktionsräder:

$$F_s, F_a, F_r \ \in \ R^6$$

Unter der Annahme, dass während der Bewegung die Systeme nicht von außen durch eine externe Kraft angetrieben werden, das heißt, dass die Auswirkungen von Schwerkraftgradienten, Sonneneinstrahlungsdruck, magnetischen Effekten oder der Einsatz von Triebwerken nicht berücksichtigt werden, ergibt sich die Erhaltung des Impulses, ausgedrückt im Inertialsystem, zu:

wobei

$M_s, M_a, M_r$

die entsprechenden Einträge der ersten sechs Zeilen der Matrix M sind.

Die Trajektorie der erweiterten Reaktionsradanordnung 2' wird beispielsweise durch eine Optimierungsrechnung gefunden, welche auf Gleichung (4) beruht. Hierbei wird ausgenutzt, dass der Impuls h aufgrund der Impulserhaltung konstant ist. Dementsprechend werden V_a und V_r so optimiert, dass V_s einer gewünschten Sollwerttrajektorie folgt (zum Beispiel konstant Null bleibt, um keine Nettorotation zu induzieren). Als weitere Aufgabe in der Optimierungsrechnung wird eine Kostenfunktion formuliert, welche dazu führt, dass die Rotationsgeschwindigkeit der Reaktionsräder 20 einer Sollwerttrajektorie folgt (zum Beispiel Null ist, um das Reaktionsrad zu desaturieren).

Die Erfindung ist nicht auf die obigen Ausführungsbeispiele beschränkt, die lediglich der allgemeinen Erläuterung des Kerngedankens der Erfindung dienen. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

Bezugszeichenliste

| 1 | Satellit |
|---|---|
| 1' | Satellit |
| 1" | Weltraumstation |
| 2 | Objekterweiterungseinrichtung |
| 2' | Reaktionsradanordnung |
| 3 | Steuerungseinrichtung |
| 4 | Bewegungsbahn |
| 5 | Raumtransporter |
| 10 | Struktur des Satelliten |
| 11' | Satellitenkörper |
| 12 | Solarpanel |
| 12' | Solarpanel |
| 13 | Objektschwerpunktachse |
| 14 | Dockingmodul |
| 15 | Dockingport |
| 16 | Aufenthaltsmodul |
| 20 | Reaktionsrad |
| 20' | Rotationsradachse |
| 21 | Rotationsantrieb |
| 22 | Rotationslager |
| 23 | erster Hebelarm |
| 24 | Hebelwerk |

| 25 | erstes Schwenklager |
|---|---|
| 25' | erste Schwenkachse |
| 26 | erster Aktuator |
| 27 | zweiter Hebelarm |
| 28 | zweites Schwenklager |
| 28' | zweite Schwenkachse |
| 29 | zweiter Aktuator |
| 50 | Docking-Interface |

| A | Gerade |
|---|---|
| B | gekrümmte Trajektorie |
| C | Gerade |
| $F_S$ | Kraft |
| $F_r$ | resultierende Kraft |
| H | Sonne |
| $L_1$ | erstes Lageregelungssystem |
| $L_2$ | zweites Lageregelungssystem |
| $S_O$ | Objektschwerpunkt |
| $S_{ERW}$ | Schwerpunkt von 2 |
| $W_H$ | Solarstrahlung |

**Patentansprüche**

**1.** In einem Raum freischwebend stabilisierbares Objekt, insbesondere Weltraumobjekt, mit einer objektseitigen, ersten Lageregelungseinrichtung ($L_1$) zur Lageregelung des einen Objektschwerpunkt (So) aufweisenden Objekts (1, 1', 1") in der Schwerelosigkeit oder im freien Fall, wobei das Objekt (1, 1', 1") mit einer eigenständig im Raum bewegbaren externen Objekterweiterungseinrichtung (2) gekoppelt ist,
**dadurch gekennzeichnet,**
**dass** die externe Objekterweiterungseinrichtung (2) mit einer relativ zum Objekt (1, 1', 1") bewegbaren zweiten Lageregelungseinrichtung ($L_2$) versehen ist.

**2.** Objekt nach Anspruch 1,
**dadurch gekennzeichnet,**
**dass** die zweite Lageregelungseinrichtung ($L_2$) zumindest eine mit dem Objekt (1, 1', 1") gekoppelte erweiterte Reaktionsradanordnung (2') aufweist, die ihrerseits einen Schwerpunkt ($S_{ERW}$) aufweist.

**3.** Objekt nach Anspruch 2,
**dadurch gekennzeichnet,**
**dass** die erweiterte Reaktionsradanordnung (2') mit zumindest einem mittels eines Rotationsantriebs (21) um eine Rotationsachse (20') drehbaren Reaktionsrad (20) versehen ist.

**4.** Objekt nach Anspruch 3,
**dadurch gekennzeichnet,**
**dass** die Rotationsachse (20') des Reaktionsrads (20) mittels zumindest eines Aktuators (26, 29) relativ zum Objektschwerpunkt (So) verlagerbar ist.

**5.** Objekt nach Anspruch 4,
**dadurch gekennzeichnet,**
**dass** der Rotationsantrieb (21) und der zumindest eine Aktuator (26, 29) von einer Steuerungseinrichtung (3) ansteuerbar sind.

**6.** Objekt nach einem der vorhergehenden Ansprüche,
**dadurch gekennzeichnet,**
**dass** das Objekt ein Weltraumgegenstand ist.

**7.** Objekt nach einem der vorhergehenden Ansprüche,
**dadurch gekennzeichnet,**
**dass** die Objekterweiterungseinrichtung (2) einen im Raum bewegbaren Roboterarm aufweist oder von einem solchen gebildet ist.

8. Objekt nach einem der Ansprüche 3 bis 7,
**dadurch gekennzeichnet,**
**dass** das zumindest eine Reaktionsrad (20) über ein Hebelwerk (24) am Objekt (1, 1', 1") angebracht ist, wobei das Reaktionsrad (20) mit dem Rotationsantrieb (21) und das Hebelwerk (24) mit dem zumindest einen Aktuator (26, 29) versehen ist, der ausgebildet ist, um zumindest einen Hebelarm (23, 27) des Hebelwerks (24) mit einer Schwenkbewegung um eine zugeordnete Schwenkachse (25', 28') zu beaufschlagen, um so die Translationsbewegung des Schwerpunkts ($S_{ERW}$) der Reaktionsradanordnung (2') entlang der Kreisbahn (4) um den Objektschwerpunkt (So) auszuführen.

9. Objekt nach Anspruch 8,
**dadurch gekennzeichnet,**
**dass** das Reaktionsrad (20) am freien Ende eines Hebelarms (23) des Hebelwerks (24) um seine Rotationsradachse (20') drehbar gelagert ist.

10. Objekt nach Anspruch 8 oder 9,
**dadurch gekennzeichnet,**
**dass** das Hebelwerk (24) zwei oder mehr Hebelarme (23, 27) aufweist, die jeweils mittels eines zugeordneten Aktuators (26, 29) um eine Schwenkachse (25', 28') schwenkbar sind.

11. Objekt nach Anspruch 8, 9 oder 10,
**dadurch gekennzeichnet,**
**dass** die Schwenkachsen (25', 28') der Hebelarme (23, 27) parallel zueinander und parallel zur Rotationsachse (20') des Reaktionsrades (20) verlaufen.

12. Objekt nach einem der vorhergehenden Ansprüche,
**dadurch gekennzeichnet,**
**dass** drei Reaktionsradanordnungen vorgesehen sind, wobei die Schwenk- und Rotationsachsen einer ersten Rotationsradanordnung orthogonal zu den Schwenk- und Rotationsachsen einer zweiten Rotationsradanordnung verlaufen, wobei die Schwenk- und Rotationsachsen der zweiten Rotationsradanordnung orthogonal zu den Schwenk- und Rotationsachsen einer dritten Rotationsradanordnung verlaufen und wobei die Schwenk- und Rotationsachsen der dritten Rotationsradanordnung orthogonal zu den Schwenk- und Rotationsachsen der ersten Rotationsradanordnung verlaufen.

13. Verfahren zur Lageregelung eines einen Objektschwerpunkt ($S_O$) aufweisenden Objekts (1, 1', 1"), insbesondere nach einem der vorhergehenden Ansprüche, in der Schwerelosigkeit oder im freien Fall, wobei das Objekt (1, 1', 1") ein erstes, objektseitiges Lageregelungssystem ($L_1$) aufweist, wobei das Objekt (1, 1', 1") mit einer bereichsweise relativ zum Objekt (1, 1', 1") bewegbaren externen Objekterweiterungseinrichtung (2) gekoppelt ist, die ein zweites Lageregelungssystem ($L_2$) aufweist, das zumindest eine erweiterte Reaktionsradanordnung (2') aufweist, die ihrerseits einen Schwerpunkt ($S_{ERW}$) aufweist und die mit zumindest einem mittels eines Rotationsantriebs (21) um eine Rotationsachse (20') drehbaren Reaktionsrad (20) versehen ist, wobei die Rotationsachse (20') mittels zumindest eines Aktuators (26, 29) relativ zum Objektschwerpunkt ($S_O$) verlagerbar ist, wobei der Rotationsantrieb (21) und der zumindest eine Aktuator (26, 29) von einer Steuerungseinrichtung (3) ansteuerbar sind,
**gekennzeichnet durch die Schritte**

- Ermitteln einer einer vorgegebenen Bewegung der erweiterten Reaktionsradanordnung (2') zugeordneten Bewegungsbahnkurve für den Schwerpunkt ($S_{ERW}$) der erweiterten Reaktionsradanordnung (2'),
- Bewegen der erweiterten Reaktionsradanordnung (2') mittels des zumindest einen Aktuators (16, 29) entlang der vorab ermittelten Bewegungsbahnkurve derart, dass sich der Schwerpunkt ($S_{ERW}$) der erweiterten Reaktionsradanordnung (2') auf einer Bahn (4), insbesondere einer Kreisbahn, um den Objektschwerpunkt ($S_O$) bewegt, wobei gleichzeitig der Rotationsantrieb (21) die Rotationsgeschwindigkeit des Reaktionsrades (20) derart ändert, dass die vektorielle Summe des Drehimpulses des um die Reaktionsradachse (20') rotierenden Reaktionsrades (20) und des Drehimpulses der sich um die Objektschwerpunktachse (13) entlang der Bahn (4) bewegenden erweiterten Reaktionsradanordnung (2') konstant ist.

14. Verfahren nach Anspruch 13,
**dadurch gekennzeichnet,**

- **dass** in einem ersten Schritt der zumindest eine Aktuator (16, 29) den Abstand des Reaktionsrades (20) vom Objektschwerpunkt ($S_O$) vergrößert, wobei sich der Schwerpunkt ($S_{ERW}$) der erweiterten Reaktionsradanordnung (2') in einer ersten Translationsbewegung entlang einer vom Objektschwerpunkt ($S_O$) ausgehenden Geraden (A) vom Objektschwerpunkt ($S_O$) weg bewegt und wobei sich die Rotationsgeschwindigkeit des Reaktionsrades (20) nicht ändert,

- **dass** in einem zweiten Schritt der zumindest eine Aktuator (26, 29) die erweiterte Reaktionsradanordnung (2') derart bewegt, dass sich der Schwerpunkt ($S_{ERW}$) der erweiterten Reaktionsradanordnung (2') auf der Bahn (4) um den Objektschwerpunkt ($S_O$) bewegt, wobei gleichzeitig der Rotationsantrieb (21) die Rotationsgeschwindigkeit des Reaktionsrades (20) derart ändert, dass die vektorielle Summe des Drehimpulses des um die Reaktionsradachse (20') rotierenden Reaktionsrades (20) und des Drehimpulses der sich um die Objektschwerpunktachse (13) entlang der Bahn (4) bewegenden erweiterten Reaktionsradanordnung (2') konstant ist, und

- **dass** in einem dritten Schritt der zumindest eine Aktuator (26, 29) den Abstand des Reaktionsrades (20) vom Objektschwerpunkt ($S_O$) verringert, wobei sich der Schwerpunkt ($S_{ERW}$) der erweiterten Reaktionsradanordnung (2') in einer zweiten Translationsbewegung entlang einer weiteren vom Objektschwerpunkt ($S_O$) ausgehenden Geraden (C) zum Objektschwerpunkt ($S_O$) hin bewegt und wobei sich die im zweiten Schritt geänderte Rotationsgeschwindigkeit des Reaktionsrades (20) nicht weiter ändert.

15. Verfahren nach Anspruch 13 oder 14,
**dadurch gekennzeichnet,**
**dass** die geänderte Rotationsgeschwindigkeit des Reaktionsrades (20) eine Zielgröße ist, nach der in der Steuerungseinrichtung (3) die Translationsbewegung des Schwerpunkts ($S_{ERW}$) der erweiterten Reaktionsradanordnung (2') entlang der Bahn (4) um den Objektschwerpunkt ($S_O$) bestimmt werden.

16. Verfahren nach Anspruch 13, 14 oder 15,
**dadurch gekennzeichnet,**
**dass** die geänderte Rotationsgeschwindigkeit des Reaktionsrades (20) gleich Null ist.

# Fig. 1

# Fig. 2

EP 4 574 683 A1

# Fig. 3A

$W_H$

H

12'

1'

$S'_O$

11'

# Fig. 3B

$W_H$

H

12'

1'

$L_1$

$S_O$

11

4

2

$L_2$

20

$S_{ERW}$

# Fig. 4

Europäisches
Patentamt

European
Patent Office

Office européen
des brevets

# EUROPÄISCHER RECHERCHENBERICHT

Nummer der Anmeldung

EP 24 20 3930

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/077425 A1 (PAYETTE RAYMOND [CA]) 14. April 2005 (2005-04-14) * Absätze [0027], [0030], [0074], [0075], [0080], [0085], [0087], [0091], [0096] - [0103]; Abbildungen 5,17,19 * | 1-16 | INV. B64G1/24 |
| | - - - - - | | |
| X | JP H09 101822 A (FUJITSU LTD) 15. April 1997 (1997-04-15) * Absätze [0043] - [0046]; Abbildungen 12a,12b * | 1 | |
| | - - - - - | | |
| X | DE 10 2007 041994 B4 (SCHEPELMANN JUERGEN [DE]) 13. August 2009 (2009-08-13) * Absätze [0050] - [0052]; Abbildungen 7-10 * | 1 | |
| | - - - - - | | |
| A | CN 113 829 360 A (UNIV ZHEJIANG WANLI) 24. Dezember 2021 (2021-12-24) * Zusammenfassung; Abbildungen 2-5 * | 1-16 | |
| | - - - - - | | RECHERCHIERTE SACHGEBIETE (IPC) |
| | | | B64G |

Der vorliegende Recherchenbericht wurde für alle Patentansprüche erstellt

| Recherchenort | Abschlußdatum der Recherche | Prüfer |
|---|---|---|
| München | 10. März 2025 | Busto, Mario |

**ANHANG ZUM EUROPÄISCHEN RECHERCHENBERICHT
ÜBER DIE EUROPÄISCHE PATENTANMELDUNG NR.**

EP 24 20 3930

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2025

| Im Recherchenbericht angeführtes Patentdokument | Datum der Veröffentlichung | Mitglied(er) der Patentfamilie | Datum der Veröffentlichung |
|---|---|---|---|
| US 2005077425 A1 | 14-04-2005 | US 2005077425 A1<br>WO 2005035363 A1 | 14-04-2005<br>21-04-2005 |
| JP H09101822 A | 15-04-1997 | KEINE | |
| DE 102007041994 B4 | 13-08-2009 | KEINE | |
| CN 113829360 A | 24-12-2021 | KEINE | |

EPO FORM P0461

Für nähere Einzelheiten zu diesem Anhang : siehe Amtsblatt des Europäischen Patentamts, Nr.12/82